# EUROPÄISCHE PATENTSCHRIFT

(11) **EP 0 979 724 B1**
(45) Veröffentlichungstag und Bekanntmachung des Hinweises auf die Patenterteilung: **08.09.2004**
(21) Anmeldenummer: 99810657.9
(22) Anmeldetag: 21.07.1999
(51) Int. Cl.: B29C 70/52

(54) **Herstellung von Profilen aus Faser-Kunststoff-Verbundstoffen**
Fabrication of profiles from fibre reinforced plastic materials
Fabrication de profilés en matériaux plastiques renforcés par des fibres

(30) Priorität: 11.08.1998 EP 98810769
(43) Veröffentlichungstag der Anmeldung: 16.02.2000
(73) Patentinhaber: Arova Schaffhausen AG, 8200 Schaffhausen (CH)
(72) Erfinder: Vodermayer, Albert M., Dr., 8305 Dietlikon (CH); Kärger, Jens, Dr., 8405 Winterthur (CH); Erlach, Hans, 8405 Winterthur (CH)
(74) Vertreter: Sulzer Management AG

(56) Entgegenhaltungen:
- EP-A- 0 396 198
- EP-A- 0 402 309
- WO-A-92/13706
- US-A- 3 684 622
- US-A- 3 992 240
- US-A- 4 151 031
- US-A- 4 778 367
- US-A- 5 057 175

## Beschreibung

Die Erfindung betrifft ein Verfahren zur Herstellung von Profilen aus Faser-Kunststoff-Verbundstoffen gemäss Oberbegriff von Anspruch 1 sowie eine Anlage zum Durchführen des Verfahrens.

Es lassen sich mittels einem kontinuierlichen Verfahren, das Pultrusion genannt wird, Profile aus mit Kunststoffen imprägnierten Verstärkungsfasem herstellen (siehe z. B. V. Kerbiriou "lmprägnieren und Pultrusion von thermoplastischen Verbundprofilen", VDI-Verlag, Düsseldorf 1997). Aus der EP-A- 0 402 309 ist eine Pultrusioneinrichtung bekannt, mit der Endlosfasem enthaltende Profilstangen herstellbar sind, die jeweils in einem Kern unidirektionale Fasern und einem Mantel geflochtene Fasern aufweisen.

Der Kunststoff wird bei dem Verfahren zwischen den Fasern so verteilt, dass eine dichte, porenarme Polymermatrix entsteht. Die Matrix besteht aus dem Kunststoff (Matrixpolymer) in Form einer weitgehend homogenen Phase, die zwischen die Fasern eingebettet ist. Mit Vorteil verwendet man als Ausgangsprodukt (Halbzeug) aus einem Verbundstoff gefertigte und bereits konsolidierte Bändchen, Mischfasern, pulverimprägnierte Faserbündel oder mit fliessfähigem Kunststoff imprägnierte Faserbündel. Als Matrixpolymere kommen Thermoplaste oder Duromere (so lange diese noch nicht ausgehärtet und somit fliessfähig sind) in Frage. Bei der Pultrusion von Verbundstoffen mit festen Thermoplasten, beispielsweise die genannten Bändchen, müssen die Kunststoffe zunächst aufgeschmolzen werden. Die Schmelzeviskosität beträgt rund 500 bis 1000 Pa s. Bekannte Abzugsgeschwindigkeiten, mit denen die Verbundstoffe durch eine Düse gezogen werden, betragen bis 6 m/min. Grössere Geschwindigkeiten führen zu Einbussen der Pultratqualität aufgrund von mangelhafter Verdichtung, ungenügender Verteilung des Matrixpolymers und/oder Faserbrüchen.

Eine Anlage zum Durchführen einer Pultrusion umfasst eine Vorratseinrichtung für das Ausgangsprodukt, einen Ofen, eine Düse (Zieh- oder Formdüse) und eine Abzugseinrichtung, wobei die Düse in einem formgebenden Bereich einen stetig sich verengenden Querschnitt aufweist. Die Düse wird mit dem Ausgangsprodukt leicht überfüllt, so dass ein Matrixrückfluss innerhalb dem durch die Fasern gebildeten Faserbett stattfindet. Die Permeabilität des Faserbetts ist anisotrop. Der Matrixfluss erfolgt hauptsächlich entlang den Fasern, aber auch quer zu diesen, wodurch sich erst die zu erzielende, weitgehend homogene Verteilung des Matrixpolymers über den gesamten Profilquerschnitt ergibt. Wegen des Matrixrückflusses erhöht sich der Faservolumenanteil in der Düse und es bildet sich am Düseneingang ein Überschuss an Kunststoff, der dort abtropft.

Es ist Aufgabe der Erfindung, ein Verfahren zur Herstellung von Profilen aus Faser-Kunststoff-Verbundstoffen zu schaffen, das im Vergleich zu bekannten Pultrusionsverfahren eine wesentlich höhere Produktionsrate erlaubt. Diese Aufgabe wird durch das in Anspruch 1 definierte Verfahren gelöst.

Das Verfahren zur Herstellung von Profilen aus Faser-Kunststoff-Verbundstoffen wird mittels mindestens einer Ziehdüse durchgeführt. In dieser Düse werden mit fliessfähigem Kunststoff getränkte Fasern zu einem Produkt mit vorgegebenem Querschnitt unter Druck geformt und bei Wärmeentzug konsolidiert. Die Querschnittsfläche der Ziehdüse wird in deren gesamten formgebenden Bereich zeitlich periodisch vergrössert und verkleinert, wobei für die Frequenz der oszillierenden Querschnittsfläche ein Wert kleiner als 1 kHz, vorzugsweise kleiner als 100 Hz, gewählt wird.

Die abhängigen Ansprüche 2 bis 7 beziehen sich auf vorteilhafte Ausführungsformen des erfindungsgemässen Verfahrens. Gegenstand der Ansprüche 8 bis 10 ist eine Anlage zum Durchführen des Verfahrens.

Beim Ablauf des erfindungsgemässen Verfahrens wechseln periodisch Phasen, während denen bei engem Düsenquerschnitt gepresst wird, mit Phasen ab, während denen der Düsenquerschnitt erweitert wird, so dass sich der Pressdruck stark reduziert. Am Anfang der Pressphase ist der Matrixanteil relativ gross; er verringert sich anschliessend wegen eines durch das Pressen verursachten Matrixrückflusses. Während der Pressphase sind die Abzugskräfte im Vergleich zur bekannten Pultrusion wesentlich kleiner, wenn bei gleichen Abzugsgeschwindigkeiten verglichen wird. Es kann daher beim erfindungsgemässen Verfahren eine höhere Abzugsgeschwindigkeit gewählt werden, bei der die Abzugskräfte gleich gross wie bei der bekannten Pultrusion sind. Bei einer so erhöhten Abzugsgeschwindigkeit stellt sich auch keine Einbusse der Produktqualität ein.

Nachfolgend wird die Erfindung anhand der Zeichnungen erläutert. Es zeigen:
- Fig. 1: eine Anlage zur Durchführung des erfindungsgemässen Verfahrens,
- Fig. 2: einen Längsschnitt durch eine erfindungsgemässe Ziehdüsen,
- Fig. 3: eine Frontansicht derselben Ziehdüse,
- Fig. 4: einen Querschnitt durch ein faserverstärktes Thermoplastband,
- Fig. 5: ein Geflecht von solchen Bändern,
- Fig. 6: eine perspektivische Darstellung des formgebenden Bereichs einer erfindungsgemässen Ziehdüse,
- Fig. 7: eine erfindungsgemässe Ziehdüse, deren bewegbarer Teil verschwenkbar ausgebildet ist,
- Fig. 8: Querschnitte durch besondere Ziehdüsen,
- Fig. 9: Diagramme zur Erläuterung des erfindungsgemässen Verfahrens anhand eines idealisierten Verfahrens, bei dem der Abzug während einer vorgegebenen Dauer unterbrochen ist,
- Fig. 10: entsprechende Diagramme mit longitudinalen Schmelzeverteilungen im Faser-Kunststoff-Verbundstoff während der erfindungsgemässen Umformung in der Ziehdüse,
- Fig. 11: Diagramme zu einem erfindungsgemässen Verfahren, bei dem die Abzugsgeschwindigkeit eine Konstante ist und
- Fig. 12: eine Ziehdüse mit Schutzfolien.

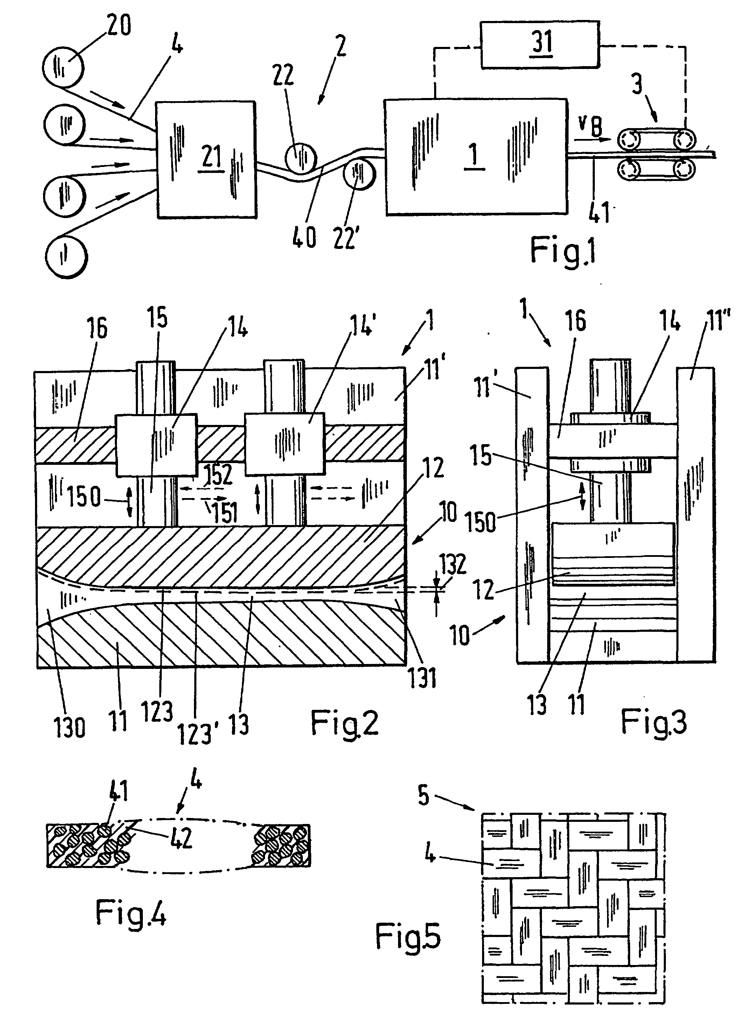

Die in Fig. 1 schematisch dargestellte Anlage umfasst eine Teilanlage 1, die mindestens eine Ziehdüse enthält, eine Teilanlage 2, mittels der ein Ausgangsprodukt zugeführt wird, und eine Abzugseinrichtung 3, mit der ein erzeugtes Profil 41 abgezogen wird. Das Ausgangsprodukt besteht aus einer Vielzahl von faserverstärkten Bändern 4, die von Vorratsrollen 20 abgezogen werden. Diese Elemente 4 des Ausgangsprodukts werden in einem Ofen 21 mittels Heissluft oder Wärmestrahlung aufgeheizt. Das Matrixpolymer kann dabei verflüssigt werden. In einem eingangsseitigen Bereich der Ziehdüse kann die Thermoplasttemperatur durch einen gesteuerten Wärmetausch weiter beeinflusst werden, beispielsweise weiter erhöht werden, so dass ein noch nicht geschmolzenes Matrixpolymer sich verflüssigt. Es kann aber auch - falls das Matrixpolymer am Düseneingang schon als Schmelze vorliegt - gekühlt werden, so dass während des Verdichtens und Formens bereits eine Konsolidierung von den Profilrändern her einsetzt. Die Elemente 4 des Ausgangsprodukts können zwischen dem Ofen 21 und der Ziehdüse der Teilanlage 1 durch Umlenkung um Stifte 22, 22' miteinander in Kontakt gebracht werden. Ein so erzeugter Strang 40 mit aufeinander haftenden Elementen 4 wird anschliessend in der Düse verdichtet und geformt.

Eine Abzugsgeschwindigkeit vB, die mit dem Abzug 3 vorgegeben wird, kann konstant sein oder dem periodisch ändernden Öffnungsgrad der Ziehdüse entsprechend variabel gestaltet werden. Zur Abstimmung zwischen einer variablen Abzugsgeschwindigkeit und dem zeitabhängigen Öffnungsgrad der Ziehdüse kann eine Steuereinrichtung 31 zwischen der Teilanlage 1 und dem Abzug 3 vorgesehen sein.

Die Figuren 2 und 3 zeigen eine erste Ausführungsform einer Ziehdüse 10, die in dem Anlagenteil 1 der erfindungsgemässen Anlage der Fig. 1 enthalten ist. Die Ziehdüse 10 ist aus zwei gegeneinander beweglichen Teilen 11 und 12 zusammengesetzt, die einen Innenraum 13 begrenzen. Der obere Teil 12 mit der inneren Oberfläche 123, 123' ist bewegbar ausgebildet. Zwei Antriebe 14, 14' mit Stangen 15, die um einen Hub 132 vertikal verschiebbar sind, führen eine quer zur Abzugsrichtung gerichtete Transversalbewegung aus, nämlich eine Parallelverschiebung der Oberfläche 123. Der periodisch sich ändernde Düsenquerschnitt pendelt zwischen zwei Zuständen mit jeweils weitgehend konstant bleibender Querschnittsfläche, nämlich einem Zustand mit weitem Querschnitt (Oberfläche 123 in oberer Lage) und einem Zustand mit engem Querschnitt (Oberfläche 123' in unterer Lage). Die Antriebe 14, 14' erzeugen eine transversale Oszillation 150 mit einer Frequenz, für die ein Wert kleiner als 1 kHz, beispielsweise 10 Hz, gewählt wird. Diese Oszillation kann beispielsweise mit einem Exzentermechanismus, mit Elektromagneten oder piezoelektrisch angetrieben werden. Die Antriebe 14, 14' sind stabil an einem Träger 16 zwischen zwei Seitenwänden 11' und 11" befestigt, die mit dem unteren Düsenteil 11 eine starre Einheit bilden.

Der Innenraum 13 der Düse 10 hat einen Einlauf 130, der sich in Abzugsrichtung verjüngt, und einen Auslauf 131, der sich im gezeigten Beispiel erweitert. Im Bereich des Einlaufs 130 kann eine Heizung in der Wandung der Düse 10 integriert sein. Im hinteren Teil ist die Düse als Kühler ausgebildet, in dem das erzeugte Profil 41 (Fig. 1 ) unter Wärmeentzug konsolidiert wird. Auch der vordere Teil kann als Kühler ausgebildet sein, wenn eine ausreichende Erwärmung des Ausgangsprodukts 40 im Ofen 21 vorgesehen ist.

Die Antriebe 14, 14' lassen sich auch so ausbilden, dass eine Bewegung ausführbar ist, bei welcher der Transversalbewegung 150 eine Longitudinalbewegung 151, 152 überlagert ist, wobei diese Longitudinalbewegung 151 in Abzugsrichtung (v_{B}) gerichtet ist, wenn die Düse sich im Zustand mit engem Querschnitt befindet. Mit einer solchen Longitudinalbewegung 151, 152 lässt sich die Abzugsbewegung unterstützen.

Der in Fig. 4 dargestellte Querschnitt durch ein unidirektional faserverstärktes Thermoplastband 4 zeigt dessen innere Struktur mit Fasern 41, die ein mit einer Polymermatrix dicht imprägniertes Faserbett bilden. Als Ausgangsprodukt des erfindungsgemässen Verfahrens kann auch ein aus Bändern 4 zusammengesetztes Geflecht 5 - siehe Fig. 5 - verwendet werden.

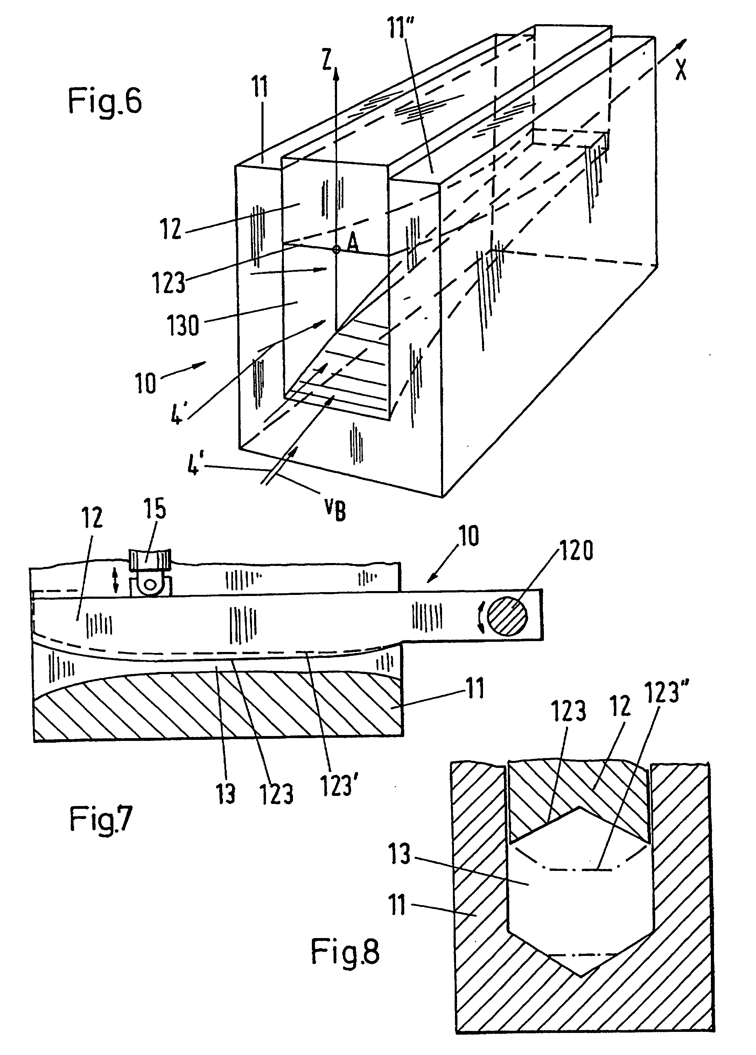

Fig. 6 illustriert perspektivisch den Einlauf 130 mit anschliessendem formgebenden Bereich 13 einer erfindungsgemässen Ziehdüse 10. Der U-förmige untere Teil 11 bildet mit seinen Flanken 11' und 11" eine Führung für den bewegbaren oberen Teil 12, der zwischen die Flanken 11' und 11" dicht aber gleitfähig eingepasst ist. Die Pfeile 4' deuten die Zufuhr des Ausgangsmaterials an, das aus verschiedenen Richtungen mit der Geschwindigkeit v_{B} zugeführt werden kann. Für nachfolgende Erläuterungen sind eine x-Achse in Abzugsrichtung, eine z-Achse in Richtung der Transversalbewegung und ein Punkt A am eingangsseitigen Ende der inneren Oberfläche 123 angegeben.

Die Transversalbewegung des bewegbaren Teils 12 kann auch eine Schwenkbewegung sein: siehe Fig. 7. Der Drehpunkt dieser Schwenkbewegung im Zentrum eines Lagers 120 muss ausgangsseitig in einem Abstand vom engsten Düsenquerschnitt angeordnet sein. Dank dieser Lage des Drehpunkts verjüngt sich der Düsenquerschnitt bei jedem Öffnungsgrad in Ziehrichtung, und an jeder Stelle des formgebenden Düsenbereichs ist der Düsenquerschnitt veränderlich. Mit Vorteil wird lediglich ein Antrieb vorgesehen (nur Antriebsstange 15 dargestellt).

Es lassen sich am einfachsten rechteckige Profilquerschnitte herstellen. Es sind auch ander Querschnitte möglich, wie dies in Fig. 8 illustriert ist: z. B. sechseckige oder auch - strichpunktiert angedeutet - u-fömige (innere Oberfläche 123" des Teils 12).

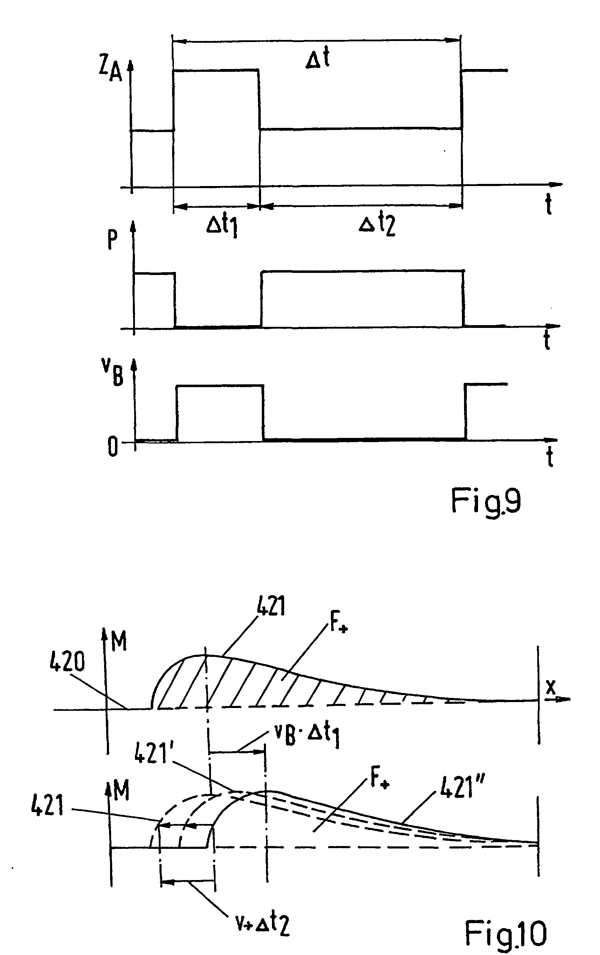

Mit den Diagrammen der Figuren 9 und 10 für ein idealisiertes Verfahren soll das erfindungsgemässe Verfahren bezüglich dem Matrixrückfluss erläutert werden. Bei diesem idealisierten Verfahren ist der Abzug während einer vorgegebenen Dauer der Periode unterbrochen. Das obere Diagramm der Fig. 9 stellt mittels der z-Koordinate des Punktes A in Fig. 6, z_{A}, den Öffnungsgrad der Ziehdüse dar. Während der ersten Phase mit der Dauer Δt₁ ist die Düse im Zustand mit weitem Querschnitt; während der restlichen Dauer der Periode, Δt₂, liegt der Zustand mit engem Querschnitt, also die Pressphase, vor. Der entsprechende Pressdruck p ist im mittleren Diagramm gezeigt. Während der ersten Phase wird nicht gepresst; während der zweiten wird mit einem konstanten Druck gepresst. Der Abzug - siehe unteres Diagramm - ist für den Zustand mit weitem Düsenquerschnitt als mit konstanter Geschwindigkeit v_{B} ablaufend dargestellt. Während dem Presszustand ist der Abzug gestoppt.

Fig. 10 zeigt entsprechende Diagramme für die Verteilung des Matrixanteils M im Faser-Kunststoff-Verbundstoff in x-Richtung (vgl. Fig. 6) entlang des formgebenden Bereichs der Düse. Vor Eintritt in die Düse ist M konstant, was mit einer horizontalen Linie 420 im oberen Diagramm der Fig. 10 dargestellt ist. Aufgrund des Matrixrückflusses folgt ein Bereich mit erhöhtem Matrixanteil, der mit einem Kurvenstück 421 dargestellt ist. Dieses Kurvenstück 421 soll die Matrixverteilung am Schuss der Pressphase wiedergeben. Die schraffierte Fläche F₊ entspricht einem Überschuss an Matrix im formgebenden Bereich der Düse. Während des Düsenzustands mit weitem Querschnitt verschiebt sich das Kurvenstück 421 in x-Richtung um die Distanz v_{B} Δt₁.

Im unteren Diagramm der Fig. 10 ist das verschobene Kurvenstück mit dem Bezugszeichen 421" bezeichnet. Während der anschliessenden Pressphase verformt sich dieses Kurvenstück aufgrund des Matrixrückflusses. Nach einem stetigen Durchlaufen von Zwischenformen 421' ergibt sich am Schluss der Periode wieder die Form 421, die im oberen Diagramm eingezeichnet ist. Der oben genannten Verschiebung v_{B} Δt₁ entspricht eine rückläufige Verschiebung der linken Flanke des Kurvenstücks 421" bzw. 421' um eine Distanz v₊ Δt₂, wobei v₊ eine Rückflussgeschwindigkeit bedeutet. Wie man sieht, wird mittels der Verschiebung des ungepressten Verbundstoffs während der ersten Phase ein durch das Pressen verursachter Rückfluss kompensiert. Somit findet im zeitlichen Mittel kein Matrixrückfluss statt.

Der Matrixüberschuss F₊ befindet sich im formgebenden Bereich der Ziehdüse, also dort wo Umformkräfte auftreten. Die überschüssige Matrix wirkt wie ein Schmiermittel, so dass die Umformkräfte gegenüber jenen einer entsprechenden Pultrusion mit konstant gehaltenem Düsenquerschnitt reduziert sind. Es ist daher sinnvoll, auch während der Pressphase den Abzug fortzusetzen. Denn der Matrixüberschuss ermöglicht dank seiner Schmierwirkung eine Erhöhung der Abzugsgeschwindigkeit gegenüber der bekannten Pultrusion, so dass sich eine Beschleunigung des Verfahrens ergibt.

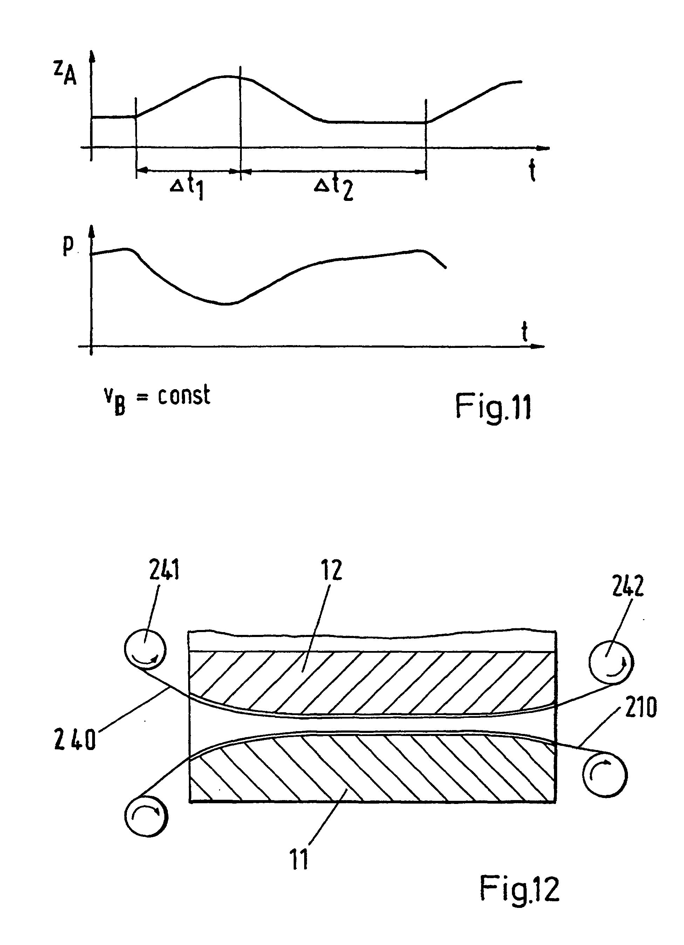

Fig. 11 zeigt qualitativ und entsprechend zu Fig. 9 für eine konstante Abzugsgeschwindigkeit v_{B}, wie sich der Pressdruck p (unteres Diagramm) in Abhängigkeit von einem variablen Öffnungsgrad der Düse (oberes Diagramm) ändert. Hier wird im allgemeinen auch während der ersten Phase eine Pressverformung geleistet, bei der allerdings dank des erweiterten Düsenquerschnitts ein Überschuss an Matrixpolymer in Abziehrichtung (x-Richtung) mittransportiert wird, so dass im Mittel lediglich ein sehr geringer oder überhaupt kein Matrixrückfluss entsteht.

Für ein konkretes Beispiel, nämlich die Herstellung eines Profils aus unidirektional kohlefasernverstärkten Polyamidbändern (CFK/PA12), mit v_{B} = 10 ml/min (= const) und bei einer Frequenz von 10 Hz soll angegeben werden, welche Länge für den formgebenden Bereich einer auf 240°C gehaltenen Düse vorzusehen ist. Aus einem statischen Pressversuch (mit 7 Bändern, je 0,8 mm dick, 15 mm breit, Fasergehalt 65 Vol%, Druck 10 bar) ist bekannt, dass für die Presszeit eine Dauer von rund 2 s benötigt wird. Die Pressphase erstreckt sich über rund 2/3 der 0,1 s dauernden Periode. Aus diesen Angaben lässt sich ableiten, dass die gesuchte Länge der Düse rund 500 mm betragen muss.

In den dargestellten Ausführungsbeispielen ist nur der obere Teil der Ziehdüse bewegbar ausgebildet. Es könnte zusätzlich auch der untere Teil beweglich und mit einem eigenen Antrieb ausgestattet sein. Bei einem spiegelbildlichen Aufbau der Düse und gegenläufig bewegten Düsenteilen lassen sich mögliche Probleme mit anregbaren Eigenfrequenzen der Düsenanordnung (Düse und Gestell) umgehen.

Besonders vorteilhaft ist es, wenn der Düse der erfindungsgemässen Anlage mit einem zusätzlichen Antrieb eine Ultraschallschwingung mit einer Frequenz grösser als 10 kHz überlagert wird. Aus beispielsweise der US-A 5 091 036 ist bekannt, dass die Ultraschallschwingung das Fliessen des Matrixpolymers verbessert, so dass die Pultrusion günstig beeinflusst wird.

Statt einer einzigen Ziehdüse können auch mehrere hintereinander geschaltete Düsen für einen mehrstufigen Umformprozess verwendet werden. Dies ist bei der Herstellung von komplizierten Profilformen erforderlich.

Bei einer zusätzlichen Beheizung des Produkts in der Düse besteht die Gefahr, dass das geschmolzene Matrixpolymer an der Oberfläche des formenden Düsenbereichs kleben bleibt. Wie in Fig. 12 angedeutet ist, kann mittels mitlaufenden Schutzfolien 240 (Rollen 241, 242) ein Kleben des Produkts verhindert werden. Bei dem erfindungsgemässen Verfahren lassen sich im Gegensatz zu den bekannten Pultrusionsverfahren relativ leicht solche Schutzfolien einsetzen.

Mit Vorteil erfolgt beim erfindungsgemässen Verfahren eine periodische Änderung des Düsenquerschnitts zwischen zwei Zuständen mit jeweils weitgehend konstant bleibender Querschnittsfläche. Die Geschwindigkeit, mit der das Produkt durch die Düse gezogen wird, kann annähernd konstant gehalten werden. Oder diese Produktgeschwindigkeit kann in Abhängigkeit von dem Querschnittszustand geändert werden und zwar so, dass die Geschwindigkeit bei weitem Querschnitt wesentlich grösser, insbesondere um mindestens das Doppelte grösser, als bei engem Querschnitt ist. Bei weitgehend konstanter Produktgeschwindigkeit wird mit Vorteil für die Phase, in der sich der Querschnitt erweitert oder der Zustand mit weitem Querschnitt vorliegt, eine kürzere Dauer Δt₁ (Fig. 11) vorgegeben wird als für die Dauer Δt₂ der komplementären Phase, die den restlichen Teil der Periode bildet.

Bei den beschriebenen Ausführungsbeispielen verjüngen sich die Ziehdüsen in Richtung der Oszillation, d. h. der Bewegungsrichtung des bewegbaren Teils. Die Düse kann aber auch so ausgebildet sein, dass eine Verjüngung quer zur Oszillationsrichtung vorliegt.

## Patentansprüche

1. Verfahren zur Herstellung von Profilen aus Faser-Kunststoff-Verbundstoffen mittels mindestens einer Ziehdüse (10), in der mit fliessfähigem Kunststoff (42) getränkte Fasern (41) zu einem Produkt (41) mit vorgegebenem Querschnitt unter Druck geformt und bei Wärmeentzug konsolidiert werden,
**dadurch gekennzeichnet, dass** die Querschnittsfläche der Ziehdüse in deren gesamten formgebenden Bereich zeitlich periodisch vergrössert und verkleinert wird, wobei für die Frequenz der oszillierenden Querschnittsfläche ein Wert kleiner als 1 kHz, vorzugsweise kleiner als 100 Hz, gewählt wird.

2. Verfahren nach Anspruch 1, **dadurch gekennzeichnet, dass** als Ausgangsprodukt eine Vielzahl von unidirektional faserverstärkten Thermoplastbändern (4) oder Geflechten (5) von solchen Bändern (4) verwendet wird, dass diese Elemente (4, 5) des Ausgangsprodukts in einem Ofen (21) mittels Heissluft oder Wärmestrahlung vor Eintritt in die Ziehdüse (10) aufgeheizt werden, so dass sich der Thermoplast (42) insbesondere verflüssigt, und dass in einem eingangsseitigen Bereich der Ziehdüse durch einen gesteuerten Wärmetausch die Thermoplasttemperatur weiter beeinflusst wird.

3. Verfahren nach Anspruch 2, **dadurch gekennzeichnet, dass** die Elemente (4, 5) des Ausgangsprodukts zwischen dem Ofen (21) und der Ziehdüse (10) miteinander in Kontakt gebracht werden und dass ein so erzeugter Strang (40) mit aufeinander haftenden Elementen in die Düse eingezogen wird.

4. Verfahren nach einem der Ansprüche 1 bis 3, **dadurch gekennzeichnet, dass** der periodisch sich ändernde Düsenquerschnitt zwischen zwei Zuständen mit jeweils weitgehend konstant bleibender Querschnittsfläche - nämlich einem Zustand mit weitem Querschnitt und einem Zustand mit engem Querschnitt - pendelt und dass die Geschwindigkeit (V_{B}), mit der das Produkt (40, 41) durch die Düse (10) gezogen wird, annähernd konstant gehalten wird oder dass diese Produktgeschwindigkeit (V_{B}) in Abhängigkeit von dem Querschnittszustand geändert wird, so dass die Geschwindigkeit bei weitem Querschnitt wesentlich grösser, insbesondere um mindestens das Doppelte grösser, als bei engem Querschnitt ist.

5. Verfahren nach Anspruch 4, **dadurch gekennzeichnet, dass** bei weitgehend konstanter Produktgeschwindigkeit (v_{B}) für die Phase, in der sich der Querschnitt erweitert oder der Zustand mit weitem Querschnitt vorliegt, eine kürzere Dauer (Δt₁) vorgegeben wird als für die Dauer (Δt₂) der komplementären Phase, die den restlichen Teil der Periode bildet.

6. Verfahren nach einem der Ansprüche 1 bis 5, **dadurch gekennzeichnet, dass** mittels mitlaufenden Schutzfolien (12) ein Kleben des Produkts an der formenden Oberfläche (123) der Ziehdüse (10) verhindert wird.

7. Verfahren nach einem der Ansprüche 1 bis 6, **dadurch gekennzeichnet, dass** der periodischen Querschnittsänderung mit einer Frequenz kleiner als 1 kHz eine Ultraschallschwingung mit einer Frequenz grösser als 10 kHz überlagert wird.

8. Anlage zum Durchführen des Verfahrens gemäss einem der Ansprüche 1 bis 7, eine Vorratseinrichtung (20) mit dem Ausgangsprodukt (4, 5), einen Ofen (21), eine Ziehdüse (10) und eine Abzugseinrichtung (3) umfassend, wobei die Ziehdüse in einem formgebenden Bereich einen stetig sich verengenden Querschnitt aufweist und ein hinterer Teil der Ziehdüse als Kühler ausgebildet ist, **dadurch gekennzeichnet, dass** die Ziehdüse aus zwei gegeneinander beweglichen Teilen (11, 12) zusammengesetzt ist, wobei insbesondere nur einer dieser Teile (12) bewegbar ausgebildet ist, dass mit mindestens einem Antrieb (14, 15) eine Transversalbewegung (150), nämlich eine Parallelverschiebung oder eine Schwenkbewegung des bewegbaren Teils senkrecht zur Ziehrichtung (v_{B}) ausführbar ist, wobei im Fall der Schwenkbewegung deren Drehpunkt (120) ausgangsseitig in einem Abstand vom engsten Düsenquerschnitt angeordnet ist.

9. Anlage nach Anspruch 8, **dadurch gekennzeichnet, dass** mit dem Antrieb (14, 15) eine Bewegung ausführbar ist, bei welcher der Transversal- eine Longitudinalbewegung (151, 152) überlagerbar ist, wobei diese Longitudinalbewegung (151) bei engem Querschnitt in Abzugsrichtung (v_{B}) gerichtet ist.

10. Anlage nach Anspruch 8 oder 9, **dadurch gekennzeichnet, dass** eine Steuereinrichtung (31) zwischen dem Antrieb (14) für den bewegbaren Teil (12) und der Abzugseinrichtung (3) angeordnet ist, mit der die Abzugsgeschwindigkeit (v_{B}) auf den Öffnungszustand der Düse (10) abstimmbar ist.

## Claims

1. A method for the manufacture of sections of fibre-plastic composite materials by means of at least one drawing nozzle (10) in which fibres (41) which are impregnated with flowable plastic (42) are formed under pressure to a product (41) with a predetermined cross-section and consolidated with the extraction of heat, **characterised in that** the cross-sectional area of the drawing nozzle is periodically increased and decreased in time in its entire shape imparting region, with a value for the frequency of the oscillating cross-sectional area being chosen to be less than 1 kHz, preferably less than 100 Hz.

2. A method in accordance with claim 1 **characterised in that** a multiplicity of unidirectionally fibre reinforced thermoplastic bands (4) or meshes (5) of such bands (4) are used as the starting product; **in that** these elements (4, 5) of the starting product are heated up in an oven (21) by means of hot air or thermal radiation prior to entry into the drawing nozzle (10) so that the thermoplastic (42) in particular liquefies; and **in that** the thermoplastic temperature is further influenced in an input-side region of the drawing nozzle.

3. A method in accordance with claim 2 **characterised in that** the elements (4, 5) of the starting product are brought into contact with one another between the oven (21) and the drawing nozzle (10); and **in that** a thus produced rope (40) is drawn into the nozzle with elements which adhere to one another.

4. A method in accordance with one of the claims 1 to 3 **characterised in that** the periodically varying nozzle cross-section oscillates between two states with respective cross-sectional areas which remain largely constant ― namely a state with a wide cross-section and a state with a narrow cross-section; and **in that** the speed (v_{B}) with which the product (40, 41) is drawn through the nozzle (10) is held approximately constant or that this product speed (v_{B}) is varied in dependence on the state of the cross-section so that the speed at the wide cross-section is substantially greater, in particular at least by a factor of two, than at the narrow cross-section.

5. A method in accordance with claim 4 **characterised in that**, with a largely constant product speed (v_{B}) for the phase in which the cross-section expands or in which the state with a wide cross-section is present, a shorter duration (Δt₁) is preset than for the duration (Δt₂) of the complementary phase, which forms the remaining part of the period.

6. A method in accordance with one of the claims 1 to 5 **characterised in that** a sticking of the product to the shaping surface (123) of the drawing nozzle (10) is prevented by means of co-moving protective films (12).

7. A method in accordance with one of the claims 1 to 6 **characterised in that** an ultrasonic oscillation with a frequency greater than 10 kHz is superimposed on the periodic cross-section variation with a frequency less than 1 kHz.

8. A plant for carrying out the method in accordance with one of the claims 1 to 7 including a supply device (20) with the starting product (4, 5), an oven (21), a drawing nozzle (10) and a draw off device (3), with the drawing nozzle having a continuously narrowing cross-section in a shape imparting region and a rear part of the drawing nozzle being formed as a cooler, **characterised in that** the drawing nozzle is assembled from two mutually movable parts (11, 12), with in particular only one of these parts (12) being designed to be movable; and **in that**, by means of at least one drive (14, 15), a transverse movement (150), namely a parallel displacement or a pivotal movement of the movable part can be carried out perpendicular to the draw direction (v_{B}), and, in the case of a pivotal movement, with its centre of rotation (120) being arranged at the output side at a distance from the narrowest nozzle cross-section.

9. A plant in accordance with claim 8 **characterised in that** a movement can be carried out with the drive (14, 15) in which a longitudinal movement (151, 152) can be superimposed on the transverse movement, with this longitudinal movement (151) being directed in the draw direction (v_{B}) when the cross-section is narrow.

10. A plant in accordance with claim 8 or claim 9 **characterised in that** a control device (31) is arranged between the drive (14) for the movable part (12) and the draw off device (3) by means of which the draw off speed (v_{B}) can be matched to the opening state of the nozzle (10).

## Revendications

1. Procédé pour la fabrication de profilés en matériaux plastiques renforcés par des fibres au moyen d'au moins une buse d'étirage (10), dans laquelle des fibres (41) imbibées avec du plastique (42) fluide sont formées sous pression pour obtenir un produit (41) avec une section prédéfinie et sont consolidées avec une évacuation de chaleur,
**caractérisé en ce que** la surface de section de la buse d'étirage est agrandie et réduite de façon périodique dans le temps dans l'ensemble de leur zone de formage, une valeur inférieure à 1 kHz, de préférence inférieure à 100 Hz étant choisie pour la fréquence de la surface de section oscillante.

2. Procédé selon la revendication 1, **caractérisé en ce qu'**une pluralité de bandes de thermoplastique (4) renforcées de fibres dans le sens unidirectionnel ou de treillis (5) de telles bandes (4) est utilisée comme produit de départ, **en ce que** ces éléments (4, 5) du produit de départ sont réchauffés dans le four (21) au moyen d'air chaud ou de rayonnement de chaleur avant d'entrer dans la buse d'étirage (10), de sorte que le thermoplastique (42) se liquéfie en particulier et **en ce que** la température du thermoplastique est encore influencée dans une zone coté entrée de la buse d'étirage par un échange de chaleur contrôlé.

3. Procédé selon la revendication 2, **caractérisé en ce que** les éléments (4, 5) du produit de départ sont mis en contact entre eux entre le four (21) et la buse d'étirage (10) et **en ce qu'**une branche (40) ainsi générée est entrée avec des éléments s'accrochant les uns aux autres dans la buse.

4. Procédé selon l'une quelconque des revendications 1 à 3, **caractérisé en ce que** la section de buse variant périodiquement fait un va-et-vient entre deux états avec une surface de section restant à chaque fois largement constante - c'est-à-dire un état avec une section large et un état avec une section étroite - et **en ce que** la vitesse (v_{B}), à laquelle le produit (40, 41) est étiré à travers la buse (10) est maintenue approximative constante ou bien **en ce que** cette vitesse du produit (v_{B}) est modifiée en fonction de l'état de section, de sorte que la vitesse devient nettement supérieure avec une large section, en particulier d'au moins du double, par rapport à une section rétrécie.

5. Procédé selon la revendication 4 **caractérisé en ce que**, avec une vitesse de produit (v_{B}) largement constante, on prédéfinit pour la phase, où la section s'élargit ou bien on a un état avec une large section, une durée (Δt₁) plus courte que pour la durée (Δt₂) de la phase complémentaire qui constitue la partie restante de la période.

6. Procédé selon l'une quelconque des revendications 1 à 5 caractérisé à ce qu'on empêche un collage du produit sur la surface (123) de formage de la buse d'étirage (10) au moyen de films de protection (12) tournants.

7. Procédé selon l'une quelconque des revendications 1 à 6, **caractérisé en ce qu'**une vibration ultrasonore avec une fréquence supérieure à 10 kHz est superposée à la variation de section périodique avec une fréquence inférieure à 1 kHz.

8. Appareil pour l'application du procédé selon l'une quelconque des revendications 1 à 7, comprenant un appareil de stockage (20) avec le produit de départ (4, 5), un four (21), une buse d'étirage (10) et un appareil de prélèvement (3), la buse d'étirage présentant une section qui se rétrécit constamment dans une zone de formage et une partie arrière de la buse d'étirage étant conçue comme refroidisseur, **caractérisé en ce que** la buse d'étirage est constituée de deux parties (11, 12) mobiles l'une par rapport à l'autre, en particulier seulement l'une de ces parties (12) étant conçue de façon mobile, **en ce qu'**avec au moins un entraînement (14, 15) on exécute un mouvement transversal (150), à savoir un déplacement parallèle ou un mouvement basculant de la partie mobile perpendiculairement au sens d'étirage (v_{B}), le point de rotation (120) du mouvement basculant étant disposé dans le cas du mouvement basculant côté sortie à une distance de la section de buse la plus étroite.

9. Appareil selon la revendication 8, **caractérisé en ce que**, avec l'entraînement (14, 15), on peut exécuter un mouvement avec lequel un mouvement longitudinal (151, 152) peut être superposé au mouvement transversal, ce mouvement longitudinal (151) étant orienté dans le sens de prélèvement (v_{B}) dans le cas d'une section étroite.

10. Appareil selon la revendication 8 ou 9, **caractérisé en ce qu'**un appareil de commande (31) est disposé entre l'entraînement (14) pour la partie mobile (12) et l'appareil de prélèvement (3), avec lequel la vitesse de prélèvement (v_{B}) peut être adaptée à l'état d'ouverture de la buse (10).
